(19) **Europäisches Patentamt**
**European Patent Office**
**Office européen des brevets**

(11) **EP 1 028 865 B1**

(12) **EUROPÄISCHE PATENTSCHRIFT**

(45) Veröffentlichungstag und Bekanntmachung des Hinweises auf die Patenterteilung:
**20.02.2002 Patentblatt 2002/08**

(51) Int Cl.$^7$: **B60K 31/00**

(21) Anmeldenummer: **98964359.8**

(22) Anmeldetag: **13.11.1998**

(86) Internationale Anmeldenummer:
**PCT/DE98/03343**

(87) Internationale Veröffentlichungsnummer:
**WO 99/25580 (27.05.1999 Gazette 1999/21)**

(54) **FAHRTREGELUNGSSYSTEM FÜR FAHRZEUGE, INSBESONDERE FÜR KRAFTFAHRZEUGE**

DRIVE REGULATING SYSTEM FOR VEHICLES ESPECIALLY FOR MOTOR VEHICLES

SYSTEME DE REGULATION DE LA VITESSE ET DU SENS DE DEPLACEMENT POUR VEHICULES, EN PARTICULIER POUR VEHICULES AUTOMOBILES

(84) Benannte Vertragsstaaten:
**DE FR GB**

(30) Priorität: **13.11.1997 DE 19750338**

(43) Veröffentlichungstag der Anmeldung:
**23.08.2000 Patentblatt 2000/34**

(73) Patentinhaber: **SIEMENS AKTIENGESELLSCHAFT**
**80333 München (DE)**

(72) Erfinder:
• **KIRCHBERGER, Andreas**
**D-93161 Sinzing (DE)**
• **MOSNER, Rainer**
**D-88662 Überlingen (DE)**

(56) Entgegenhaltungen:
**EP-A- 0 441 522      DE-A- 4 341 689**
**DE-A- 19 523 111      DE-A- 19 614 061**

EP 1 028 865 B1

**Beschreibung**

Die Erfindung betrifft ein Fahrtregelungssystem für Fahrzeuge, insbesondere für Kraftfahrzeuge.

Die automatische Steuerung von Fahrzeugen ist ein erstrebenswertes Ziel. Hierbei spielt die adaptive Fahrtregelung (Adaptive Cruise Control = ACC) eine zunehmende Bedeutung, da sie es dem automatisch gesteuerten Fahrzeug ermöglicht, auf eventuell auftretende Hindernisse bzw. sich bewegende Objekte zu reagieren. Bei herkömmlichen ACC-Systemen ist ein Sensor vorgesehen, der den Abstand und die Geschwindigkeit eines sich im Abtastraum des Sensors befindlichen Objekts ermittelt. Die Abstands- und Geschwindigkeitsdaten eines detektierten Objekts werden nur dann zur Regelung der Fahrzeuggeschwindigkeit herangezogen, wenn das detektierte Objekt eindeutig als auf der Fahrspur des Fahrzeugs befindlich identifiziert wird.

Ein derart arbeitendes Fahrtregelungssystem weist den Nachteil auf, daß die Steuerung des Fahrzeugs durch das Fahrtregelungssystem unruhig und für einen möglichen Fahrgast unangenehm ist.

Aus der Druckschrift DE 196 14 061 A1 ist ein Fahrtregelungssystem für Kraftfahrzeuge bekannt, bei dem eine Gleichspurwahrscheinlichkeit für jedes von einer Sensoreinrichtung ermittelte Objekt bestimmt wird und abhängig von der Gleichspurwahrscheinlichkeit ein Zielvorausfahrzeug ausgewählt wird, zu welchem die Entfernung konstant gehalten wird. Die Gleichspurwahrscheinlichkeit ist dabei abhängig von dem Ausmaß und dem Grad einer Kurve sowie von der Relativposition und der Relativgeschwindigkeit eines erfassten Objekts zum Systemfahrzeug.

Der Erfindung liegt daher die Aufgabe zugrunde, ein Fahrtregelungssystem zu schaffen, das eine gleichmäßige und ruhige Steuerung eines Fahrzeugs gewährleistet.

Diese Aufgabe wird durch ein Fahrtregelungssystem mit den Merkmalen des Anspruchs 1 gelöst.

Die erfindungsgemäße Lösung weist den Vorteil auf, daß das automatisch gesteuerte Fahrzeug gleichmäßig beschleunigt oder verlangsamt wird. Starke Verlangsamungs- bzw. Bremsvorgänge werden erst mit dem Maß eingeleitet, in dem sicher ist, daß das Fahrzeug sich auf Kollisionskurs mit einem fremden Objekt befindet. Durch die Veränderung der Fahrtgeschwindigkeit in Abhängigkeit von der Trackingwahrscheinlichkeit wird eine schnellere Reaktion auf Objekte erzielt und eine Reaktion auf detektierte Falschziele abgeschwächt oder unterbunden.

Die Regelung der Geschwindigkeit und/oder Fahrtrichtung des Fahrzeuges erfolgt in der Weise in Abhängigkeit von der Trackingwahrscheinlichkeit P, daß vorzugsweise mit steigendem P die Regelungsstärke intensiviert wird. Dies kann durch eine Zahl von Zwischenstufen geschehen oder durch eine mit zunehmendem P kontinuierlich ansteigende Regelungsfunktion.

In den abhängigen Ansprüchen sind bevorzugte und vorteilhafte Weiterbildungen des erfindungsgemäßen Fahrtregelungssystems angegeben.

Weitere Merkmale, Vorteile und Einzelheiten der Erfindung ergeben sich aus der nachfolgenden Beschreibung, in der ein Ausführungsbeispiel des Erfindungsgegenstandes anhand der beigefügten Zeichnungen näher erläutert wird. Es zeigt:

Fig. 1    eine schematische Darstellung eines Einsatzes eines Fahrtregelungssystems und

Fig. 2    ein Blockdiagramm zur Ermittlung der Tracking-Wahrscheinlichkeit.

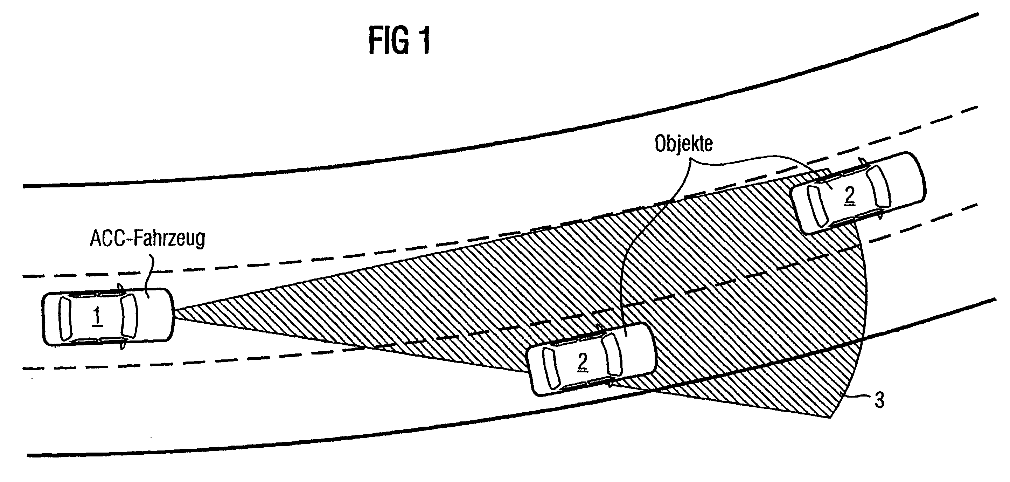

Fig. 1 zeigt ein am Straßenverkehr teilnehmendes Fahrzeug 1 mit einem Fahrtregelungssystem (Adaptive Cruise Control System). Zur automatischen Regelung der Fahrt von Fahrzeug 1 werden Objekte 2, die sich möglicherweise auf der Fahrspur des Fahrzeugs 1 befinden, erfaßt und die Geschwindigkeit des Fahrzeugs 1 entsprechend angepaßt.

Das Fahrtregelungssystem weist eine Sensoreinrichtung, eine Auswerteeinheit und eine Geschwindigkeits-/Fahrtrichtungsänderungseinheit auf.

In der Sensoreinrichtung werden die Bewegungsdaten und Positionsdaten eines sich im Abtastraum 3 der Sensoreinrichtung befindenden Objekts 2 ermittelt. Insbesondere wird der Abstand zwischen Fahrzeug 1 und Objekt 2 und die Relativgeschwindigkeit zwischen Fahrzeug 1 und Objekt 2 bestimmt. Des weiteren wird der Winkel zwischen der Fahrzeugbewegungsrichtung und der Richtung vom Fahrzeug 1 zum Objekt 2 ermittelt.

Es versteht sich von selbst, daß auch mehrere Objekte, wie in Fig. 1 gezeigt, durch die Sensoreinrichtung erfaßt werden können und durch diese die jeweils zu einem Objekt gehörenden Daten getrennt ermittelt werden. Die Ermittlung der Objektdaten durch die Sensoreinrichtung erfolgt in Meßzyklen. Dadurch wird die Beobachtung komplexer, zeitlich veränderlicher Vorgänge ermöglicht.

Zur Ermittlung der jeweiligen Objektdaten, d. h. Abstand, Relativgeschwindigkeit und Winkel, kann das Fahrzeug 1 vorzugsweise mit einem Radarsensor, z. B. einem Dreistrahlradarsensor, ausgestattet sein. Weitere Details sind in "Longitudinal Autonomous Vehicle Control Utilizing Access to Conventional Cruise Control, Automatic Transmission and Brakes" von Alfred Höß in Sae Symposium Proceedings, Detroit, USA, 1995, beschrieben.

Die von der Sensoreinrichtung ermittelten Daten werden an die Auswerteeinheit gegeben. Die Auswerteeinheit verarbeitet diese Daten und Eigenbewegungsdaten des Fahrzeuges und gibt entsprechend Signale an die Geschwindigkeits-/Fahrtrichtungsänderungseinheit.

Die Eigenbewegungsdaten des Fahrzeuges umfassen die Geschwindigkeit des Fahrzeugs. Um die Kurvenlage des Fahrzeugs zu erfassen, werden auch die Daten eines Gierratensensors und/oder Radsensor-Signale und/oder Lenkwinkelsensorsignale und/oder CAN-Bus-Daten ausgewertet. Ferner wird auch die Quer- und Lateralbeschleunigung des Fahrzeugs erfaßt.

Zur weiteren Auswertung der Bewegungs- und Positionsdaten des Objekts 2 und der Eigenbewegungsdaten des Fahrzeugs 1 wird eine Trackingwahrscheinlichkeit P ermittelt, die ein Maß dafür ist, mit welcher regelungsrelevanten Güte das Objekt 2 detektiert worden ist und in Abhängigkeit von dieser eine Geschwindigkeitsveränderung des Fahrzeugs 1 vorgenommen werden muß. Sofern man die Trackingwahrscheinlichkeit P auf das Intervall 0 bis 1 normiert, werden für den Fall P = 0 keine Geschwindigkeitsveränderungsmaßnahmen vorgenommen und für den Fall P = 1 Geschwindigkeitsveränderungsmaßnahmen wie in Fahrtregelungssystemen nach dem Stand der Technik vorgenommen. P = 1 entspricht somit der eindeutigen Zuordnung eines Objekts 2 als auf Kollisionskurs mit Fahrzeug 1 befindlich. Nimmt P einen Wert > 0 und < 1 an, so werden Fahrtänderungsmaßnahmen nur entsprechend geschwächt vorgenommen. Die Regelung der Geschwindigkeit und/oder Fahrtrichtung des Fahrzeuges erfolgt in der Weise in Abhängigkeit von der Trackingwahrscheinlichkeit P, daß vorzugsweise mit steigendem P die Regelungsstärke intensiviert wird. Dies kann durch eine Zahl von Zwischenstufen geschehen oder durch eine mit zunehmendem P kontinuierlich ansteigende Regelungsfunktion.

Die Trackingwahrscheinlichkeit P hängt von all den Größen ab, deren Ermittlung durch die Sensoreinrichtung oder durch die fahrzeuginternen Datengeber relevanten Meß- und/oder Verarbeitungsungenauigkeiten unterliegt. Insofern hängt P funktionell u. a. von $f_T$, $f_A$, $f_D$, $f_V$, $f_W$ und $f_P$ ab, die wie folgt definiert sind:

$f_T$ ist ein Maß für die Anzahl der Meßzyklen seit der ersten Objekterkennung. Nach jedem Meßzyklus wird versucht, die im aktuellen Meßzyklus detektierten Objekte den bereits verfolgten Objekten zuzuordnen. Für jedes verfolgte Objekt wird ein Zähler mitgeführt, der bei erfolgreicher Zuordnung erhöht wird. Je größer dieser Zähler ist, desto sicherer wird das Objekt erkannt und desto größer ist der zugehörige Bewertungsfaktor $f_T$.

$f_A$ steht für die Stabilität des vom Objekt reflektierten Signals. Das aktuelle Meßsignal des Objekts wird mit denen aus vorhergehenden Zyklen verglichen. Je geringer die Schwankungen der Meßsignale sind, desto größer ist der zugehörige Bewertungsfaktor $f_A$.

$f_D$ ist ein Maß für die Güte des ermittelten Abstandes zwischen Fahrzeug 1 und Objekt 2. Hierbei wird die Abweichung des ermittelten Objektabstandes von der unter fahrdynamischen Gesichtspunkten zu erwartenden Entfernung bestimmt. Die mit einem Fahrzeugmodell vorausberechneten Größen, wie z. B. der Objektabstand, werden mit den tatsächlich gemessenen verglichen. Je geringer die Abweichung ist, desto größer ist der zugehörige Bewertungsfaktor $f_D$.

$f_V$ ist ein Maß für die Güte der ermittelten Geschwindigkeit und $f_W$ ein Maß für die Güte des ermittelten Winkels. Beide werden analog zu $f_D$ ermittelt.

$f_P$ ist ein Maß für die Aufenthaltswahrscheinlichkeit des beobachteten Objekts auf der Fahrbahn des Fahrzeugs 1. Die Aufenthaltswahrscheinlichkeit wird durch den aktuellen Objektwinkel, die Fahrspur des Fahrzeugs 1 und die zu erwartende Objektfahrspur ermittelt. Je größer die Aufenthaltswahrscheinlichkeit ist, desto größer ist der zugehörige Bewertungsfaktor $f_p$. Dieser Faktor ist für die Bewertung von Einschermanövern wichtig.

Da die funktionelle Abhängigkeit der Trackingwahrscheinlichkeit P von den Bewertungsfaktoren f kompliziert und im wesentlichen unbekannt ist, wird in erster Näherung von einem linearen Zusammenhang ausgegangen. Insofern wird die Trackingwahrscheinlichkeit P bestimmt durch

$$P = w_T * f_T + w_A * f_A + w_D * f_D + w_V * f_V + w_W * f_W + w_P * f_P,$$

wobei $w_T$, $w_A$, $w_D$, $w_V$, $w_W$ und $w_P$ zu bestimmende Gewichtungsfaktoren sind. Diese Gewichtungsfaktoren werden vom Fachmann empirisch ermittelt bzw. vorgegeben. Hier werden die konkreten Kenntnisse des Fachmanns über die Genauigkeit der Messungen der Sensoreinrichtung und der Eigenbewegungsdaten des Fahrzeugs berücksichtigt. Ist von dem Radarsensor beispielsweise bekannt, daß er zur Geschwindigkeitsmessung sehr gut geeignet ist, aber die ermittelten Abstandswerte einer großen Ungenauigkeit unterliegen (z. B. Pulsradar), so kann der Fachmann die zugehörigen Bewertungsfaktoren f entsprechend gewichten.

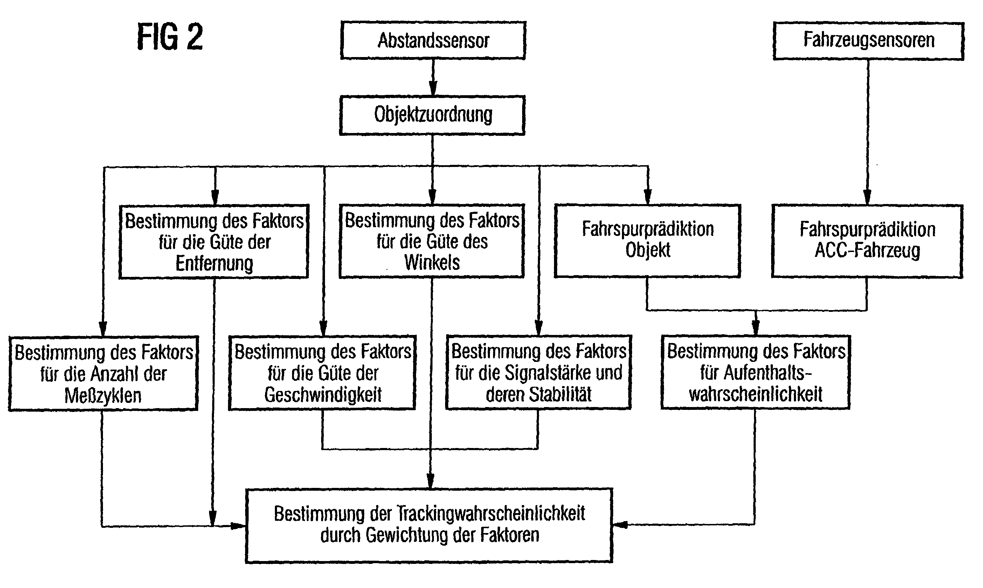

Die Bestimmung der Trackingwahrscheinlichkeit ist in dem Ablaufdiagramm von Fig. 2 graphisch dargestellt. Der in Fig. 2 gezeigte Abstandssensor bestimmt die Bewegungs-/Positionsdaten des Objekts 2. Die Fahrzeugsensoren liefern die Eigenbewegungsdaten des Fahrzeugs 1. Nach der Objektzuordnung der Daten des Abstandssensors werden die Bewertungsfaktoren $f_T$, $f_D$, $f_V$, $f_W$ und $f_A$ bestimmt. Zur Bestimmung des Bewertungsfaktors $f_P$ werden sowohl die Daten des Abstandssensors als auch der Fahrzeugsensoren genutzt, die zunächst zu einer Fahrspurprädiktion des Objekts 2 bzw. einer Fahrspurprädiktion des Fahrzeugs 1 verarbeitet werden. Aus diesen Daten wird der Bewertungsfaktor $f_P$ ermittelt. Die Bestimmung der Trackingwahrscheinlichkeit P erfolgt dann durch funktionelle Verknüpfung der Bewertungsfaktoren f.

Die Geschwindigkeits-/Fahrtrichtungsänderungseinheit wird durch das Ausgangssignal der Auswerteeinheit gesteuert. Die Geschwindigkeits-/Fahrtrichtungsänderungseinheit kann in das Motormanagement, das Getriebe, auch Automatikgetriebe, und die Bremseinrichtung des Fahrzeugs 1 eingreifen. Soll die Geschwindigkeit des Fahrzeugs 1 reduziert werden, so kann je nach verbleibendem Zeitraum bis zu einer möglichen Kollision mit Objekt 2 die Kraftstoffzufuhr reduziert, verbunden mit einer Reduktion der Gänge, oder das Bremsmoment erhöht werden. Soll die Geschwindigkeit nach einem Verlangsamungsvorgang wieder auf eine vorgegebene Reisegeschwindigkeit erhöht werden, so werden entsprechend die Kraftstoffzufuhr erhöht und im Getriebe ein höherer Gang gewählt.

Die Trackingwahrscheinlichkeit kann auch zur Regelung der Fahrtrichtung des Fahrzeuges verwendet werden. Hierzu kann der Fachmann auf bisher existierende Systeme zurückgreifen und in ihnen analog zu oben beschriebener Geschwindigkeitsregelung eine Fahrtrichtungsregelung implementieren, in der die Trackingwahrscheinlichkeit P ein Maß für die Intensität vorgenommener Regelungen ist.

**Patentansprüche**

1. Fahrtregelungssystem für Fahrzeuge, insbesondere für Kraftfahrzeuge, umfassend

   a) eine Sensoreinrichtung zur Ermittlung von Bewegungs-/Positionsdaten eines sich im Abtastraum (3) der Sensoreinrichtung befindenden Objekts (2) und
   b) eine Auswerteeinheit,

      i) die die von der Sensoreinrichtung ermittelten Bewegungs-/Positionsdaten des Objekts (2) und vorliegende Eigenbewegungsdaten des Fahrzeugs (1) aufnimmt und verarbeitet,
      ii) die in Abhängigkeit von diesen Däten die Geschwindigkeit und/oder die Fahrtrichtung des Fahrzeuges (1) regelt und
      iii) durch die eine Trackingwahrscheinlichkeit P ermittelt wird, die ein Maß dafür ist, mit welcher regelungsrelevanten Güte das Objekt (2) detektiert worden ist,

   wobei eine Regelung der Geschwindigkeit und/oder Fahrtrichtung des Fahrzeugs (1) in Abhängigkeit von der Trackingwahrscheinlichkeit P derart erfolgt, daß mit steigender Trackingwahrscheinlichkeit P die Regelungsstärke intensiviert wird.

2. Fahrtregelungssystem für Fahrzeuge gemäß Anspruch 1, **dadurch gekennzeichnet, daß** die von der Sensoreinrichtung ermittelten Bewegungs-/Positionsdaten den Abstand des Objekts (2) vom Fahrzeug (1) und/oder die Relativgeschwindigkeit des Objekts (2) zum Fahrzeug (1) und/oder den Winkel zwischen der Fahrzeugbewegungsrichtung und der Richtung vom Fahrzeug (1) zum Objekt (2) umfassen.

3. Fahrtregelungssystem für Fahrzeuge gemäß Anspruch 1 oder 2, **dadurch gekennzeichnet, daß** die Eigenbewegungsdaten die Geschwindigkeit des Fahrzeugs (1) und/oder die Giergeschwindigkeit des Fahrzeugs (1) und/oder die Quer- und Lateralbeschleunigung des Fahrzeugs (1) umfassen.

4. Fahrtregelungssystem für Fahrzeuge mit einem Motor, einem Getriebe und einer Bremse gemäß einem der vorangehenden Ansprüche, **dadurch gekennzeichnet, daß** die Regelung der Geschwindigkeit des Fahrzeugs durch einen Eingriff in das Motormanagement und/oder das Getriebe und/oder die Bremse erfolgt.

5. Fahrtregelungssystem für Fahrzeuge nach einem der vorangehenden Ansprüche, **dadurch gekennzeichnet, daß** die Trackingwahrscheinlichkeit P von folgenden Größen abhängt:

   a) $f_T$: Anzahl von durchlaufenen Meßzyklen seit Objekterkennung, und/oder
   b) $f_A$: Stabilität des vom Objekt reflektierten Sensorsignals, und/oder
   c) $f_D$: Güte des ermittelten Objektabstandes, und/oder
   d) $f_V$: Güte der ermittelten Relativgeschwindigkeit zwischen Fahrzeug (1) und Objekt (2), und/oder
   e) $f_W$: Güte des ermittelten Winkels zwischen Fahrzeugbewegungsrichtung und der Richtung vom Fahrzeug (1) zum Objekt (2), und/oder
   f) $f_P$: Aufenthaltswahrscheinlichkeit des Objekts (2) auf der Fahrspur des Fahrzeugs (1).

**6.** Fahrtregelungssystem für Fahrzeuge gemäß Anspruch 5, **dadurch gekennzeichnet, daß** $f_T$ ein Zähler ist, der erhöht wird, wenn ein im aktuellen Meßzyklus detektiertes Beobachtungsobjekt dem bereits verfolgten Objekt (2) zugeordnet wird.

**7.** Fahrtregelungssystem für Fahrzeuge gemäß Ansprüchen 5 und 6, **dadurch gekennzeichnet, daß** $f_A$ um so größer ist, je geringer die Schwankungen der Sensormeßsignale des Objekts (2) zwischen aufeinanderfolgenden Meßzyklen ist.

**8.** Fahrtregelungssystem für Fahrzeuge gemäß Ansprüchen 5 bis 7, **dadurch gekennzeichnet, daß** $f_D$ um so größer ist, je geringer die Abweichung der ermittelten Objektentfernung von der unter fahrdynamischen Gesichtspunkten zu erwartenden Entfernung ist.

**9.** Fahrtregelungssystem für Fahrzeuge gemäß Ansprüchen 5 bis 8, **dadurch gekennzeichnet, daß** $f_V$ um größer ist, je geringer die Abweichung zwischen der ermittelten Objektrelativgeschwindigkeit und der unter fahrdynamischen Gesichtspunkten zu erwartenden Relativgeschwindigkeit ist.

**10.** Fahrtregelungssystem für Fahrzeuge gemäß Ansprüchen 5 bis 9, **dadurch gekennzeichnet, daß** $f_W$ um größer ist, je geringer die Abweichung zwischen dem ermittelten Winkel zwischen Fahrzeugbewegungsrichtung und der Richtung vom Fahrzeug (1) zum Objekt (2) und dem unter fahrdynamischen Gesichtspunkten zu erwartenden Winkel ist.

**11.** Fahrtregelungssystem für Fahrzeuge gemäß Ansprüchen 5 bis 10, **dadurch gekennzeichnet, daß** die Aufenthaltswahrscheinlichkeit $f_P$ durch den aktuellen Winkel zwischen der Fahrzeugbewegungsrichtung und der Richtung vom Fahrzeug (1) zum Objekt (2), die Fahrspur des Fahrzeugs (1) und die zu erwartende Objektfahrspur ermittelt wird, und $f_P$ um so größer ist, je größer die zugehörige Wahrscheinlichkeit ist.

**12.** Fahrtregelungssystem für Fahrzeuge gemäß Ansprüchen 5 bis 11, **dadurch gekennzeichnet, daß** die Trackingwahrscheinlichkeit P bestimmt wird durch:

$$P = w_T * f_T + w_A * f_A + w_D * f_D + w_V * f_V + w_W * f_W + w_P * f_P,$$

wobei $w_T$, $w_A$, $w_D$, $w_V$, $w_W$ und $w_P$ sich aus der relativen Bedeutung der Güte der einzelnen Meßergebnisse ergebende Gewichtungsfaktoren sind.

**Claims**

**1.** Cruise control system for vehicles, in particular for motor vehicles, comprising

a) a sensor device for determining movement/ position data of an object (2) located in the sensing range (3) of the sensor device, and
b) an evaluation unit,

i) which registers and processes the movement/ position data of the object (2) which are determined by the sensor device and available data on the movement of the vehicle (1) itself, and
ii) regulates the velocity and/or the direction of travel of the vehicle (1) as a function of these data,
**characterized in that**

c) a tracking probability P is determined in the evaluation unit, said tracking probability being a measure of the control-related quality of the detection of the object (2), and
d) the velocity and/or direction of travel of the vehicle (1) are regulated as a function of the tracking probability P.

**2.** Cruise control system for vehicles according to Claim 1, **characterized in that** the movement/ position data which are determined via the sensor device comprise the distance between the object (2) and the vehicle (1) and/or the relative velocity of the object (2) with respect to the vehicle (1) and/or the angle between the direction of movement of the vehicle and the direction of the vehicle (1) with respect to the object (2).

3.  Cruise control system for vehicles according to Claim 1 or 2, **characterized in that** the data on the movement of the vehicle itself comprise the velocity of the vehicle (1) and/or the yaw velocity of the vehicle (1) and/or the lateral acceleration of the vehicle (1).

4.  Cruise control system for vehicles having an engine, a transmission and a brake according to one of the preceding claims, **characterized in that** the velocity of the vehicle is regulated by intervention in the engine management and/or the transmission and/or the brake.

5.  Cruise control system for vehicles as claimed in one of the preceding claims, **characterized in that** the tracking probability P depends on the following variables:

    a) $f_T$: number of measurement cycles passed through since the detection of the object, and/or
    b) $f_A$: stability of the sensor signal reflected by the object, and/or
    c) $f_D$: quality of the distance determined from the object, and/or
    d) $f_V$: quality of the relative velocity determined between the vehicle (1) and the object (2), and/or
    e) $f_W$: quality of the angle determined between the direction of movement of the vehicle and the direction of the vehicle (1) with respect to the object (2), and/or
    f) $f_P$: probability of the object (2) being located in the path of the vehicle (1).

6.  Cruise control system for vehicles according to Claim 5, **characterized in that** $f_T$ is a counter which is increased if an observed object detected in the current measurement cycle is assigned to the object (2) which has already been pursued.

7.  Cruise control system for vehicles according to Claims 5 and 6, **characterized in that** $f_A$ is greater the smaller the fluctuations of the sensor measurement signals of the object (2) between successive measurement cycles.

8.  Cruise control system for vehicles according to Claims 5 to 7, **characterized in that** $f_D$ is greater the smaller the deviation between the distance determined from the object and the distance which is to be expected in terms of criteria of the dynamics of vehicle movement.

9.  Cruise control system for vehicles according to Claims 5 to 8, **characterized in that** $f_V$ is greater the smaller the deviation between the relative velocity of the object which is determined and the relative velocity which is to be expected in terms of criteria of the dynamics of vehicle movement.

10. Cruise control system for vehicles according to Claims 5 to 9, **characterized in that** $f_W$ is greater the smaller the deviation between the angle determined between the direction of movement of the vehicle and the direction of the vehicle (1) with respect to the object (2) and the angle which is to be expected in terms of criteria of the dynamics of vehicle movement.

11. Cruise control system for vehicles according to Claims 5 to 10, **characterized in that** the location probability $f_P$ is determined by the current angle between the direction of movement of the vehicle and the direction of the vehicle (1) with respect to the object (2), the path of the vehicle (1) and the expected path of the object, and $f_P$ is greater the greater the associated probability.

12. Cruise control system for vehicles according to Claims 5 to 11, **characterized in that** the tracking probability P is determined by:

$$P = w_T * f_T + w_A * f_A + w_D * f_D + w_V * f_V + w_W * f_W + w_P * f_P,$$

    where $w_T$, $w_A$, $w_D$, $w_V$, $w_W$ and $w_P$ are weighting factors resulting from the relative significance of the quality of the individual measurement results.

**Revendications**

1.  Système de régulation de déplacement pour véhicules automobiles, en particulier pour véhicules automobiles à moteur,

comportant :

a) un dispositif de détecteur pour déterminer des données de mouvement et de position d'un objet (2) se trouvant dans le volume de détection (3) du dispositif de détecteur, et
b) une unité d'interprétation,

i) qui relève et interprète les données de mouvement et de position de l'objet (2) déterminées par le dispositif de détecteur et des données préexistantes propres au mouvement du véhicule automobile (1),
ii) qui régule en fonction de ces données la vitesse et/ou la direction de déplacement du véhicule automobile (1), et
iii) par laquelle est déterminée une probabilité de trajectoire P, qui constitue une mesure des facteurs de qualité, propres à la régulation, avec lesquels l'objet (2) a été détectés,

une régulation de la vitesse et/ou de la direction du véhicule automobile (1) se faisant en fonction de la probabilité de trajectoire P de telle façon que la force de la régulation soit intensifiée lorsqu'augmente le facteur P correspondant à la probabilité de trajectoire.

2. Système de régulation de déplacement pour véhicules automobiles suivant la revendication 1, **caractérisé en ce que** les données de mouvement et de position déterminées par le dispositif de détecteur englobent la distance de l'objet (2) au véhicule automobile (1), et/ou la vitesse relative de l'objet (2) par rapport au véhicule automobile (1), et/ou l'angle entre la direction de déplacement du véhicule automobile et la direction allant du véhicule automobile (1) à l'objet (2).

3. Système de régulation de déplacement pour véhicules, suivant la revendication 1 ou la revendication 2, **caractérisé en ce que** les données de mouvement propres au véhicule englobent la vitesse du véhicule automobile (1), et/ou la vitesse de lacet du véhicule automobile (1), et l'accélération latérale du véhicule automobile (1)

4. Système de régulation de déplacement pour véhicules, automobiles comportant un moteur, une boîte de vitesse et un frein suivant l'une des revendications précédentes, **caractérisé en ce que** la régulation de la vitesse du véhicule automobile se fait par une intervention dans la conduite du moteur et/ou de la boîte de vitesse et/ou des freins.

5. Système de régulation de déplacement pour véhicules, suivant l'une des revendications précédentes, **caractérisé en ce que** la probabilité P de trajectoire dépend des grandeurs suivantes:

a) $f_T$: nombre de cycles de mesure écoulés depuis la reconnaissance de l'objet, et/ou
b) $f_A$: stabilité du signal de détecteur réfléchi par l'objet, et/ou
c) $f_D$: qualité de la distance de l'objet relevée, et/ou
d) $f_V$: qualité de la vitesse relative relevée entre le véhicule automobile (1) et l'objet (2), et/ou
e) $f_W$: qualité de l'angle relevé entre la direction de déplacement du véhicule et la direction allant du véhicule automobile (1) à l'objet, et/ou
f) $f_P$: Probabilité d'arrêt de l'objet (2) sur la piste de circulation du véhicule automobile (1).

6. Système de régulation de déplacement pour véhicules automobile suivant la revendication 5, **caractérisé en ce que** fT est un compteur qui augmente si un objet observé détecté dans le cycle actuel de mesure est associé à l'objet (2) déjà suivi.

7. Système de régulation de déplacement pour véhicules automobiles suivant les revendications 5 et 6, **caractérisé en ce que** $f_A$ est d'autant plus grand que sont petites les oscillations des signaux de mesure du détecteur de 1 (objet (2) entre des cycles de mesure successifs.

8. Système de régulation de déplacement pour véhicules automobiles suivant les revendications 5 à 7, **caractérisé en ce que** $f_D$ est d'autant plus grand qu'est petit l'écart de la distance de l'objet relevée par rapport à la distance à attendre du point de vue de la dynamique de déplacement.

9. Système de régulation de déplacement pour véhicules automobiles suivant les revendications 5 à 8, **caractérisé en ce que** $f_v$ est d'autant plus grand qu'est petit l'écart entre la vitesse relative de l'objet relevée et la vitesse relative à attendre du point de vue de la dynamique de déplacement.

**10.** Système de régulation de déplacement pour véhicules automobiles suivant les revendications 5 à 9, **caractérisé en ce que** $f_w$ est d'autant plus grand qu'est petit l'écart entre l'angle relevé entre la direction de déplacement du véhicule et la direction allant du véhicule automobile (1) à l'objet (2), et l'angle à attendre du point de vue de la dynamique de déplacement.

**11.** Système de régulation de déplacement pour véhicules automobiles suivant les revendications 5 à 10, **caractérisé en ce que** la probabilité d'arrêt $f_P$ est déterminée par l'angle actuel entre la direction de déplacement du véhicule et la direction allant du véhicule automobile (1) à l'objet (2), par la trajectoire de circulation du véhicule automobile (1), et par la trajectoire de circulation prévisionnelle de l'objet, et **en ce que** $f_P$ est d'autant plus grand que la probabilité correspondante est plus grande.

**12.** Système de régulation de déplacement pour véhicules automobiles suivant les revendications 5 à 11, **caractérisé en ce que** la probabilité de trajectoire P est déterminée par

$$P = W_T*f_T + W_A*f_A + W_D*f_D + W_V*f_V + W_W*f_W + W_P*f_P,$$

$W_T$, $W_A$, $W_D$, $W_V$, $W_W$, $W_P$ étant des facteurs de pondération s'obtenant à partir du poids relatif des valeurs des qualités des différents résultats de mesure.

FIG 1

FIG 2

Fahrzeugsensoren

Fahrspurprädiktion ACC-Fahrzeug

Bestimmung des Faktors für Aufenthalts- wahrscheinlichkeit

Fahrspurprädiktion Objekt

Abstandssensor

Objektzuordnung

Bestimmung des Faktors für die Güte des Winkels

Bestimmung des Faktors für die Signalstärke und deren Stabilität

Bestimmung des Faktors für die Güte der Entfernung

Bestimmung des Faktors für die Güte der Geschwindigkeit

Bestimmung des Faktors für die Anzahl der Meßzyklen

Bestimmung der Trackingwahrscheinlichkeit durch Gewichtung der Faktoren